Europäisches Patentamt

**European Patent Office**

Office européen des brevets

(19)

(11) Veröffentlichungsnummer: **0 020 891**
B1

(12) **EUROPÄISCHE PATENTSCHRIFT**

(45) Veröffentlichungstag der Patentschrift:
25.05.83

(51) Int. Cl.³: **G 03 B 9/16**, G 03 B 9/66

(21) Anmeldenummer: **80101834.2**

(22) Anmeldetag: **05.04.80**

(54) **Photographischer Verschluss.**

(30) Priorität: **12.04.79 DE 2914930**

(43) Veröffentlichungstag der Anmeldung:
**07.01.81 Patentblatt 81/1**

(45) Bekanntmachung des Hinweises auf die Patenterteilung:
**25.05.83 Patentblatt 83/21**

(84) Benannte Vertragsstaaten:
**CH DE FR GB LI**

(56) Entgegenhaltungen:
**DE-A-2 826 970**
**DE-U-7 807 851**
**FR-A-2 187 130**

(73) Patentinhaber: **KODAK AKTIENGESELLSCHAFT,
Postfach 369, D-7000 Stuttgart-Wangen 60 (DE)**

(72) Erfinder: **Bethmann, Heinz G., Drosselweg 18,
D-7012 Fellbach (DE)**

(74) Vertreter: **Lewandowsky, Klaus et al, Kodak
Aktiengesellschaft Patentabteilung Postfach 369,
D-7000 Stuttgart 60 (DE)**

## Photographischer Verschluß

Die Erfindung bezieht sich auf einen photographischen Verschluß mit einer Öffnungs- und einer Schließlamelle, die von einer Ausgangsstellung in eine Endstellung bewegbar sind, wobei die Schließlamelle in ihrer Ausgangsstellung von einer von einem Elektromagneten betätigten Haltevorrichtung gehalten ist, die aus einer Feder mit einem gehäuseseitig befestigten Ende und einem freien, die Schließlamelle haltenden Ende sowie einer an der Feder befestigten Ankerplatte besteht.

Durch das DE-GM 7 807 851 ist ein photographischer Zweilamellenverschluß bekanntgeworden, dessen Öffnungslamelle von einem Verschlußantrieb in eine Offenlage geschleudert wird und dessen Schließlamelle mittels einer elektromagnetisch betätigten Haltevorrichtung festgehalten wird, bis eine Zeitsteuervorrichtung den Elektromagneten entregt und damit die Haltevorrichtung wirkungslos macht. Die Haltevorrichtung dieser bekannten Vorrichtung besteht aus einem Federarm, an dessen freiem Ende eine Ankerplatte befestigt ist, die gegen das Joch des Elektromagneten vorgespannt ist und die an ihrem freien Ende die Schließlamelle festhält. Nach dem Entregen des Elektromagneten wirkt auf die Schließlamelle nur noch die Vorspannung der Haltefeder, die zwar schwächer ist als die Antriebsfeder der Schließlamelle und diese durch federndes Ausweichen zum Ablauf freigibt, die aber doch so stark dimensioniert sein muß, daß die Ankerplatte dabei nicht vollständig vom Joch des Elektromagneten abhebt, sondern lediglich eine Kippbewegung um einen Arm des Joches ausführt. Bei diesem Verschluß treten deshalb Verzögerungen der Schließbewegung der Schließlamelle auf, da zur Schließlamellenfreigabe zunächst der Reibschluß zwischen der Schließlamelle und deren Haltefeder überwunden werden muß, bevor die Schließbewegung wirksam werden kann.

Ein schnelles Wirksamwerden der Schließlamelle ist aber insbesondere dann erforderlich, wenn beispielsweise eine Begrenzung der Blitzlichtmenge durch Schließen des Verschlusses in Abhängigkeit von der vom Aufnahmeobjekt reflektierten Lichtmenge vorgenommen werden soll.

Der Erfindung liegt die Aufgabe zugrunde, einen photographischen Verschluß der gattungsgemäßen Art so auszubilden, daß er ein schnelles Wirksamwerden der Schließlamelle nach dem Entregen des Elektromagneten gewährleistet.

Erfindungsgemäß wird dies dadurch erreicht, daß die Haltefeder für die Schließlamelle entgegen der Anzugsrichtung des Joches des Elektromagneten vorgespannt ist und die Ankerplatte von einem Arm einer Schenkelfeder gegen das Joch des Elektromagneten hin beaufschlagt ist, und daß der Arm der Schenkelfeder im Bewegungsweg eines Verschlußantriebsteils oder der Öffnungslamelle so angeordnet ist, daß beim Öffnen des Verschlusses die Schenkelfeder von der Ankerplatte abgehoben wird.

In vorteilhafter Weise wird die Haltefeder unmittelbar nach dem Entregen des Elektromagneten durch deren Vorspannung von dem Joch wegbewegt. Da die Schließlamelle unter Federvorspannung an der Haltefeder gehalten wird, wirken bei der Schließlamellenfreigabe somit sowohl die Federvorspannung der Haltefeder als auch die Federvorspannung der Antriebsfeder der Schließlamelle auf die Haltefeder im Sinne einer Freigabe ein, so daß die Schließbewegung der Schließlamelle sehr schnell freigegeben wird. Unterstützt wird die Freigabebewegung der Schließlamelle ferner durch die mit Schrägen versehenen Angriffsflächen zwischen der Schließlamelle und der Haltefeder.

In vorteilhafter Ausgestaltung der Erfindung wird die Ankerplatte von einer Feder, die stärker ist als die entgegengerichtete Haltefederkraft gegen das Joch des Elektromagneten beaufschlagt. Dadurch braucht der Elektromagnet bei seiner Erregung lediglich eine für die Arretierung der Schließlamelle ausreichende Haltekraft aufzubringen.

In vorteilhafter Ausgestaltung der Erfindung weist die schwenkbar gelagerte Öffnungslamelle zwei Arme auf, von denen einer in der Ausgangsstellung der Verschlußlamellen an dem Verschlußantriebsteil anliegend die Verschlußlamellen in der Schließlage arretiert. Der andere Arm der Öffnungslamelle ragt in den Bewegungsweg des Verschlußantriebsteils und arretiert diese in der Verschlußoffenstellung.

In einer Weiterbildung der Erfindung kann das Abheben der Feder, die die Ankerplatte gegen das Joch des Elektromagneten andrückt, nicht von dem Verschlußantriebsteil, sondern von dem in den Bewegungsweg des Verschlußantriebsteils ragenden Arm der Öffnungslamelle oder einem anderen geeigneten Teil dieser Lamelle angehoben werden.

Weitere Vorteile der Erfindung sind der Beschreibung eines in der Zeichnung dargestellten Ausführungsbeispiels sowie den Unteransprüchen zu entnehmen.

Die Erfindung zeigt jeweils in schematischer Darstellung in der

Fig. 1 eine Ansicht des Verschlusses in der Schließstellung und

Fig. 2 eine Ansicht des Verschlusses in der Offenstellung.

An einer Platte 11 sind um ein Lager 5 eine Öffnungslamelle 1 und eine Schließlamelle 2 schwenkbar gelagert. Eine um das Lager 5 angeordnete Schließfeder 6 greift mit ihren Armen 6a und 6b an Lappen 1c und 2b der Lamellen 1 und 2 an und beaufschlagt diese derart, daß sie an der Fläche 2c aneinander anliegen.

Die Öffnungslamelle 1 weist einen Arm 1a auf, der sich an einem in Pfeilrichtung »A« bewegbaren Verschlußantriebsteil 4 abstützt, und einen Arm 1b, der im Bewegungsweg des Verschlußantriebsteils 4 angeordnet ist.

Die Schließlamelle 2 weist eine Haltenase 2a auf, die mit einer am freien Ende einer Haltefeder 8 angeordneten Abbiegung 8a in Eingriff steht. Die Haltefeder 8 ist mit ihrem anderen Ende mittels einer Schraube 12 an einem seinerseits in der Platte 11 befestigten Isolierkörper 7b befestigt. An dem Isolierkörper 7b sind auch ein Joch 7a und ein Elektromagnet 7 einer nicht dargestellten elektronischen Belichtungszeitsteuervorrichtung angeordnet.

An der Haltefeder 8 ist eine Ankerplatte 9 befestigt, die mit dem Joch 7a des Elektromagneten 7 zusammenwirkt. Die Ankerplatte 9 wird von der Haltefeder 8 entgegen der Anzugsrichtung des Joches 7a beaufschlagt.

Eine an dem Isolierkörper 7b angeordnete Schenkelfeder 10 stützt sich mit ihrem einen Arm 10a an einem am Isolierkörper 7b angeordneten Stift 13 ab. Mit ihrem anderen Arm 10b beaufschlagt die Schenkelfeder 10 unter Überwindung der schwächeren Haltefeder 8 die Ankerplatte 9 gegen das Joch 7a des Elektromagneten 7. Außerdem ragt der Arm 10b der Schenkelfeder 10 in den Bewegungsweg des Verschlußantriebsteils 4.

Die Wirkungsweise der Vorrichtung ist folgende:

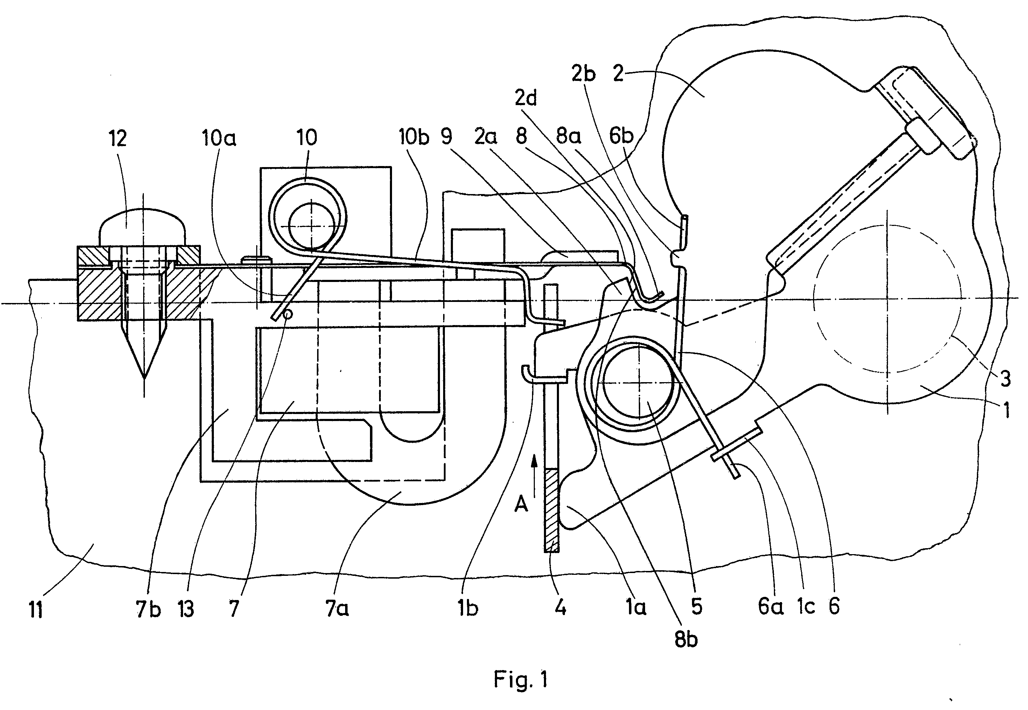

Der Verschluß befindet sich gemäß Fig. 1 in der Schließstellung, in der sich der Arm 1a an dem Verschlußantriebsteil 4 abstützt, so daß die Verschlußlamellen 1 und 2 gegen eine unbeabsichtigte Betätigung, beispielsweise bei einer Stoßbeanspruchung, gesichert sind.

Durch Betätigen eines nicht dargestellten Auslösers wird ein nicht dargestellter Schalter betätigt, wodurch der Elektromagnet 7, 7a erregt und die Ankerplatte 9 festgehalten wird. Gleichzeitig wird das Verschlußantriebsteil 4 zum Ablauf in die Pfeilrichtung »A« freigegeben.

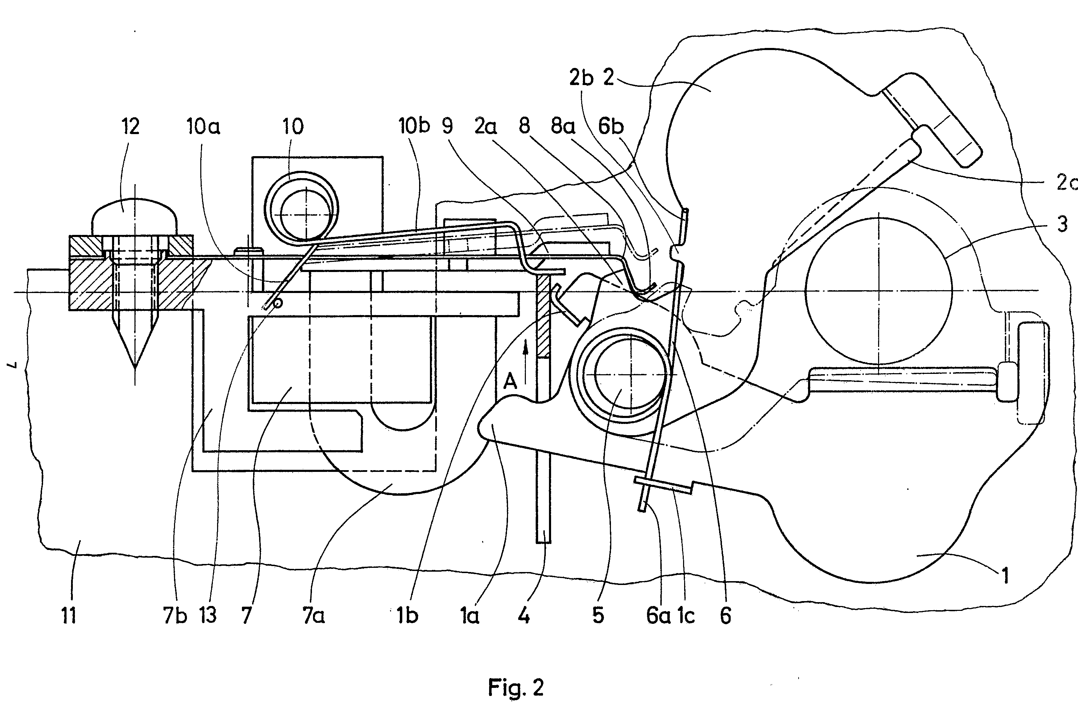

Dabei stößt das Verschlußantriebsteil 4 gegen den Arm 1b der Öffnungslamelle 1 und bewegt diese in die in der Fig. 2 dargestellte Offenlage, in der die Belichtungsöffnung 3 freigegeben ist. In dieser Offenlage stützt sich der Arm 1b der Öffnungslamelle 1 an dem Antriebsteil 4 ab, so daß die Öffnungslamelle 1 nicht zurückprallen kann. Bei dieser Öffnungsbewegung der Öffnungslamelle 1 wird die Federvorspannung der Schließfeder 6 erhöht.

Das Verschlußantriebsteil 4 hebt während seines Ablaufs den Arm 10b der Schenkelfeder 10 von der Ankerplatte 9 ab, so daß diese nur noch durch elektromagnetische Kraft gehalten wird. Über die Abbiegung 8a der Haltefeder 8 wird die Schließlamelle 2 an deren Haltenase 2a in der Ausgangsstellung gemäß Fig. 2 festgehalten.

Sobald die Belichtungszeitsteuervorrichtung eine ausreichende Belichtungszeit ermittelt hat, wird der Elektromagnet 7, 7a entregt und die Ankerplatte 9 nicht mehr gegen das Joch 7a gezogen.

Dadurch wird die Vorspannung der Haltefeder 8 wirksam, so daß diese zusammen mit der Ankerplatte 9 vom Joch 7a des Elektromagneten 7 abhebt. Da auf die Haltenase 2a der Schließlamelle 2 nun keine Haltekraft mehr einwirkt, bewegt sich diese unter Wirkung der Kraft der Schließfeder 6 im Uhrzeigersinn und beendet die Belichtung durch Abdecken der Belichtungsöffnung 3. Die Freigabe der Schließlamelle 2 erfolgt dadurch, daß die Abhebekraft der Haltefeder 8 und die Federvorspannung der Schließfeder 6 gleichzeitig wirksam werden, sehr schnell. Die Freigabe der Schließlamelle 2 wird noch dadurch unterstützt, daß die Abbiegung 8a der Haltefeder 8 und die Haltenase 2a der Schließlamelle 2 mittels Schrägflächen 2d und 8b aneinander angreifen.

Zur Herstellung einer erneuten Aufnahmebereitschaft wird das Verschlußantriebsteil 4 durch eine nicht dargestellte Spannvorrichtung entgegen der Pfeilrichtung »A« bewegt. Dabei verschwenkt es über den Arm 1a die Öffnungslamelle 1 und über diese auch die Schließlamelle 2 von der Endstellung in die Ausgangsstellung gemäß Fig. 1, in der sich der Arm 1a wieder an dem Verschlußantriebsteil 4 abstützt. In dieser Stellung drückt der Arm 10b der Schenkelfeder 10 die Ankerplatte 9 wieder entgegen der Vorspannung der Haltefeder 8 gegen das Joch 7a des Elektromagneten 7 an, und die Abbiegung 8a arretiert die Schließlamelle 2 an deren Haltenase 2a.

## Patentansprüche

1. Photographischer Verschluß mit einer Öffnungs- und einer Schließlamelle, die von einer Ausgangsstellung in eine Endstellung bewegbar sind, wobei die Schließlamelle (2) in ihrer Ausgangsstellung von einer von einem Elektromagneten (7) betätigten Haltevorrichtung gehalten ist, die aus einer Feder (8) mit einem gehäuseseitig befestigten Ende und einem freien, die Schließlamelle (2) haltenden Ende (8a) sowie einer an der Feder (8) befestigten Ankerplatte (9) besteht, dadurch gekennzeichnet, daß die Haltefeder (8, 8a) für die Schließlamelle (2) entgegen der Anzugsrichtung des Joches (7a) des Elektromagneten (7) vorgespannt ist und die Ankerplatte (9) von einem Arm (10b) einer Schenkelfeder (10) gegen das Joch (7a) des Elektromagneten (7) hin beaufschlagt ist, und daß der Arm (10b) der Schenkelfeder (10) im Bewegungsweg eines Verschlußantriebsteils (4) oder der Öffnungslamelle (1) so angeordnet ist, daß beim Öffnen des Verschlusses die Schenkelfeder (10) von der Ankerplatte (9) abgehoben wird.

2. Photographischer Verschluß nach Anspruch 1, dadurch gekennzeichnet, daß die Haltefeder (8) eine Abbiegung (8a) aufweist, die an einer Haltenase (2a) der Schließlamelle (2) angreift.

3. Photographischer Verschluß nach Anspruch 1 oder 2, dadurch gekennzeichnet, daß die Öffnungslamelle (1) einen ersten Arm (1a) aufweist, der in der Ausgangsstellung des Verschlusses an dem Verschlußantriebsteil (4) anliegt und mit einem zweiten Arm (1b) versehen ist, der im Bewegungsweg des Verschlußantriebsteils (4) angeordnet ist und der in der Endstellung des Verschlusses an dem Verschlußantriebsteil (4) anliegt.

4. Photographischer Verschluß nach einem oder mehreren der vorstehenden Ansprüche, dadurch gekennzeichnet, daß die Verschlußlamellen (1, 2) um ein gemeinsames Lager (5) schwenkbar angeordnet sind und von einer Schließfeder (6) beaufschlagt werden.

5. Photographischer Verschluß nach einem oder mehreren der vorstehenden Ansprüche, dadurch gekennzeichnet, daß die Abbiegung (8a) der Haltefeder (8) und die Haltenase (2a) der Schließlamelle (2) einander zugeordnete Schrägflächen (2d, 8b) aufweisen.

## Claims

1. Photographic shutter having an opening and a closing blade that are movable from a starting position to an end position, the closing blade (2) being held in its starting position by a retaining means which is actuated by an electromagnet (7) and consists of a spring (8) with an end secured to the housing and a free end (8a) holding the closing blade (2), as well as of an armature plate (9) secured to said spring (8), characterized in that the retaining spring (8, 8a) serving to hold the closing blade (2) is biased in a direction opposite to that of the attraction of the yoke (7a) of the electromagnet (7) and that the armature plate (9) is urged by an arm (10b) of a leg spring (10) towards the yoke (7a) of the electromagnet (7), and in that said arm (10b) of the leg spring (10) is located in the path of movement of a shutter drive element (4) or of the opening blade (1) such that the leg spring (10) is moved away from the armature plate (9) when the shutter is opened.

2. Photographic shutter according to claim 1, characterized in that the retaining spring (8) has a bent portion (8a) engaging a holding nose (2a) of the closing blade (2).

3. Photographic shutter according to claims 1 or 2, characterized in that the opening blade (1) comprises a first arm (1a) that is in contact with the shutter drive element (4) when the shutter is in its starting position, and a second arm (1b) that is arranged in the path of movement of the shutter drive element (4) and is in contact with said shutter drive element (4) when the shutter is in its end position.

4. Photographic shutter according to one or several of the preceding claims, characterized in that the shutter blades (1, 2) are arranged for pivotal movement about a common support (5) and are biased by a closing spring (6).

5. Photographic shutter according to one or several of the preceding claims, characterized in that the bent portion (8a) of the retaining spring (8) and the holding nose (2a) of the closing blade (2) have inclined surfaces (2d, 8b) which are associated with each other.

## Revendications

1. Obturateur photographique muni de pales d'ouverture et de fermeture mobiles d'une position de départ à une position finale dont la pale de fermeture (2) est maintenue dans sa position de départ par un dispositif de retenue qui est actionné par un électro-aimant (7) et qui est constitué d'un ressort (8) dont une extrémité est solidaire du boîtier et dont une autre extrémité libre (8a) retient la pale de fermeture (2) et aussi d'une armature (9) solidaire du ressort (8), obturateur caractérisé en ce que le ressort de retenue (8, 8a) de la pale de fermeture (2) est prébandé à l'encontre de la sollicitation de la culasse (7a) de l'électro-aimant (7) et l'armature (9) est actionnée par une branche (10b) d'un ressort (10) contre la culasse (7a) de l'électro-aimant (7) et en ce que la branche (10b) du ressort (10) est disposée sur la trajectoire d'un organe (4) d'entraînement de l'obturateur ou de la pale d'ouverture (1) de manière qu'à l'ouverture de l'obturateur le ressort (10) se sépare de l'armature (9).

2. Obturateur photographique conforme à la revendication 1 caractérisé en ce que le ressort de retenue (8) présente un crochet (8a) qui coopère avec un bec (2a) de la pale de fermeture (2).

3. Obturateur photographique conforme à la revendication 1 ou 2, caractérisé en ce que la pale d'ouverture (1) comprend un premier bras (1a) qui est au contact de l'organe (4) d'entraînement de l'obturateur quand ce dernier est en position de départ et un second bras (1b) qui est disposé sur la trajectoire de l'organe 4 d'entraînement de l'obturateur et est au contact de cet organe lorsque l'obturateur est dans sa position finale.

4. Obturateur photographique conforme à l'une quelconque des revendications précédentes, caractérisé en ce que les pales (1, 2) de l'obturateur sont montées pour basculer autour d'un axe (5) commun et sont mise en oeuvre par un ressort de fermeture (6).

5. Obturateur photographique conforme à l'une quelconque des revendications précédentes, caractérisé en ce que le crochet (8a) du ressort de retenue (8) et le bec (2a) de la pale de fermeture (2) sont munis de surfaces chanfreinées (2d, 8b) coopérantes.

Fig. 1

0 020 891

Fig. 2